# EUROPEAN PATENT SPECIFICATION

(11) **EP 3 762 168 B1**
(45) Date of publication and mention of the grant of the patent: **13.04.2022**
(21) Application number: 19715236.6
(22) Date of filing: 07.03.2019
(51) Int. Cl.: B23B 13/00, B23B 13/02

(54) **FEEDING APPARATUS FOR ELONGATED WORKPIECES**
WERKZEUGMASCHINENZUFÜHRVORRICHTUNG FÜR LÄNGLICHE WERKSTÜCKE
DISPOSITIF D'ALIMENTATION DE MACHINE-OUTIL DESTINÉ À DES PIÈCES ALLONGÉES

(30) Priority: 09.03.2018 IT 201800003396
(43) Date of publication of application: 13.01.2021
(73) Proprietor: METAL ART DI FRANCO E MAURO TRANQUILLI S.R.L., 60019 Senigallia (IT)
(72) Inventor: TRANQUILLI, Franco, 60019 Senigallia (AN) (IT)
(86) International application number: PCT/IT2019/050049
(87) International publication number: WO 2019/171408

(56) References cited:
- WO-A1-2015/074723
- GB-A- 461 462
- US-A- 3 072 269

## Description

### Technical Field

The present invention relates to servo-mechanisms for a machine tool, in particular a lathe, and concerns a feeder of elongated workpieces such as metal bars or rods.

### Background art

As is known, for bars or rods to be machined in a lathe or similar machine tool, the operating chuck of the machine tool feeds elongated workpieces into the machine's work space through a tubular sleeve, built into the machine tool, which conveys and guides the workpiece. The workpiece is forced through the guide sleeve in discontinuous translational movements by force of the actions conveyed by a motor-driven feeder controlled in suitable coordinating motion with the machine tool.

The distance of each movement may be identical or variable depending on the length of the workpiece necessary to mould the objects for production.

In conformity with prior art technology in the sector, the feeder may include an elastic collet capable of pushing the bar along the sleeve, which it too may pass through, to progressively draw itself nearer to the chuck.

As machining continues, when the remaining length of the workpiece is insufficient to produce a further item of the machined product, the remaining workpiece is ejected from the machine as loss and is replaced by a new workpiece.

One essential drawback of such feeders is that, generally, a different collet diameter is required for each bar that is to be moved along. Therefore, the machine tool may need to be equipped with a wide range of collets: the larger the range of sizes of the bars to be moved through the machine tool sleeve according to each work plan, the larger the range of collets that it must be fitted with.

This brings with it clearly notable drawbacks insofar as fitting the machine tool with a wide range of collets represents a handicap from the perspectives of equipment costs, use of space and, above all, economic machinery management, as the repeated material replacement of collets in the operating mechanism entails changeover times, liabilities and costs that place an unhelpful burden on the total cost of the finished product being machined.

Document US 3 072 269 A shows a feeding apparatus according to the preamble of claim 1.

### Disclosure of the invention

The aim of the present invention is, therefore, to resolve the problems affecting the prior art technique by providing a feeding apparatus that offers universality and flexibility of use; that is to say, an apparatus capable of both pushing and clasping a solid or hollow workpiece of any length or thickness - subject to the size of the sleeve - and of operating both inside and outside the sleeve itself.

### Brief description of drawings

In accordance with said purpose, the invention has the technical features and properties defined in the accompanying claims and described hereinunder with reference to the figures contained in the enclosed drawings wherein:
- Figure 1 is a perspective overall view of an elongated workpiece feeder, according to the invention, to be conceived as serving and mounted on a generic machine tool, in particular a lathe, which is not shown in the drawing;
- Figure 2 is a perspective overall view of the apparatus shown in Figure 1, partially shown and stripped of some details to better highlight others;
- Figure 3 is a perspective view of Figure 2, further simplified;
- Figures 4 and 5 are enlarged perspective views of certain components of Figure 3;
- Figure 6 is a partial sectional view through the component shown in Figure 5;
- Figures 7 and 8 are enlarged, schematic sectional views illustrating the operation of certain components of the apparatus;

### Detailed description of preferred embodiment of the invention

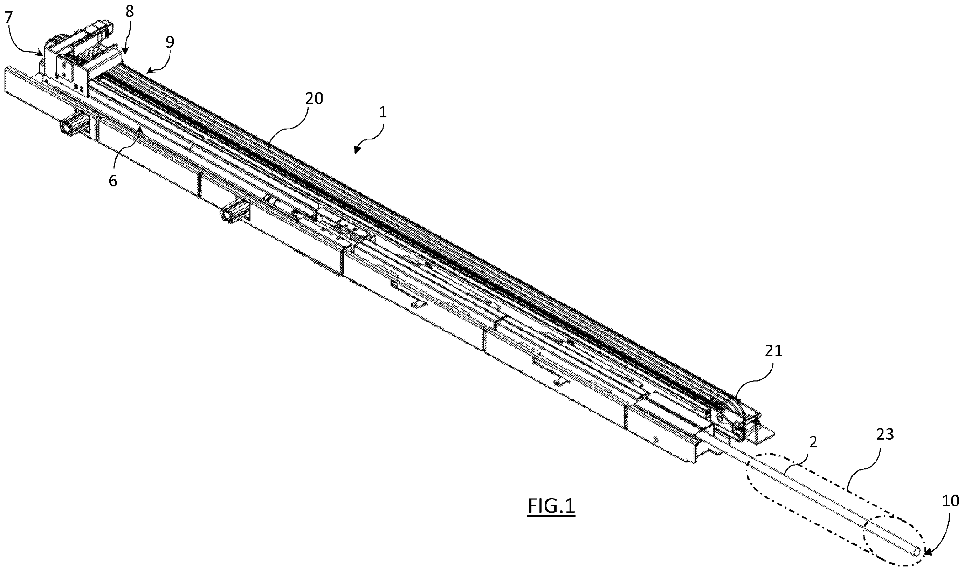

Referring now to the figures contained in the accompanying drawings, Figure 1 shows a complete feeding apparatus for feeding elongated workpieces (2), such as bars or rods, in controlled movements along a feeder line (10) towards a machine tool chuck (not shown) through a transit and guide sleeve (23) pertaining to said machine tool, which has been assigned the number 1 for illustrative purposes.

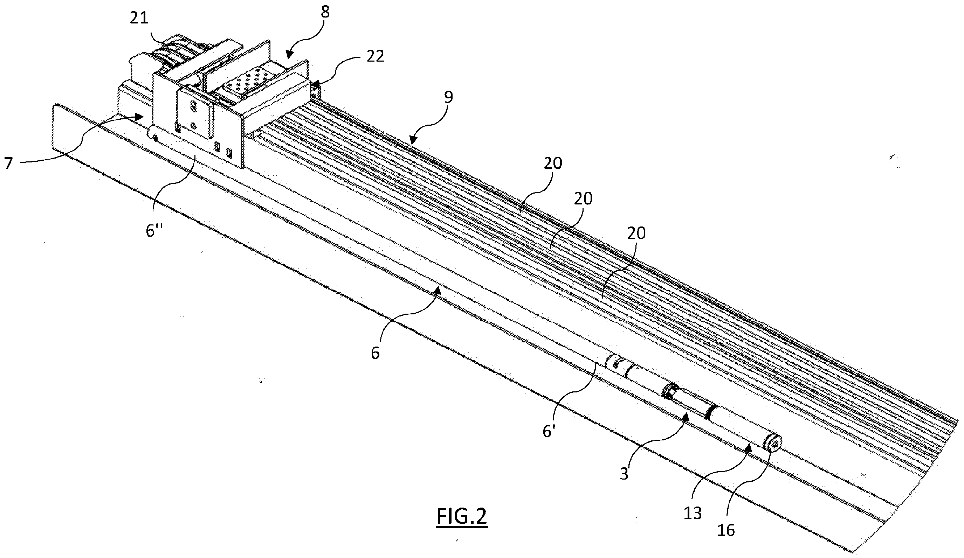

It may be seen in Figure 2 that the apparatus (1) essentially comprises at least one first collet (3); a pushing member (6); means (8) to support and guide the pushing member (6) and means (8) for the actuated operation of the first collet (3).

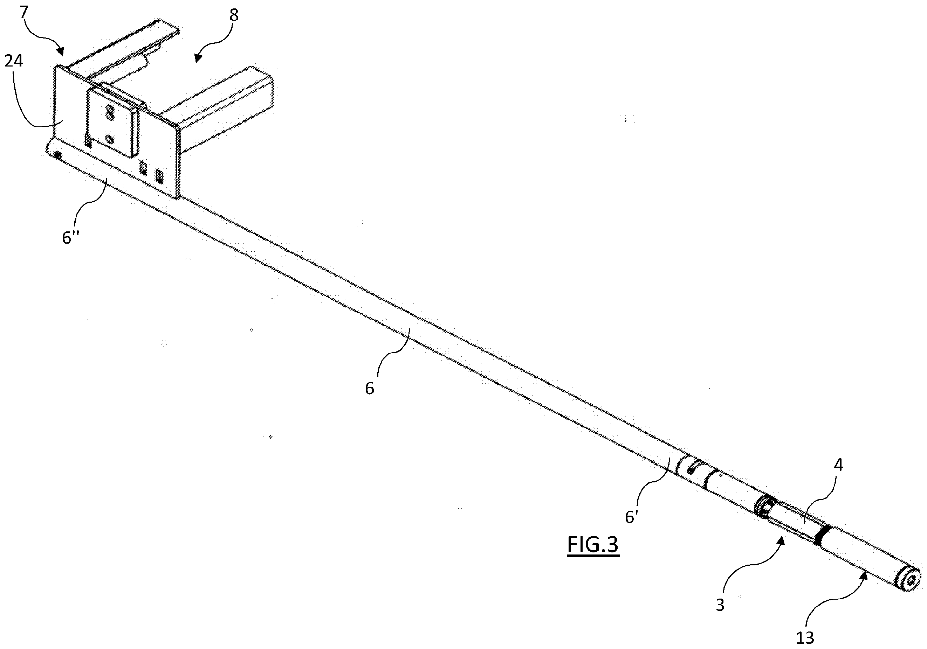

Figure 3, more particularly, shows that the first collet (3) is cantilever-supported by the pushing member (6). The latter has a tubular shape and internally hollow structure, at its first end (6') supporting the first collet (3), which projects horizontally towards the machine tool chuck, and at its other end (6) attached to the plate (24) of an operating member, which is denoted overall with reference number (7).

Figure 3 and, better still, Figure 2 show that the pushing member's (6) support and guide means (8) comprise a first carriage (9), which is alternatively movable parallel to the workpiece (2) feeder line (10), to which the operating member (7) of the pushing member (6) is attached.

Preferably, said first carriage (9) should comprise at least one belt (20) wrapped around a pulley wheel couple (21), at least one of which should be motor-driven. The belt (20) runs parallel to the workpiece (2) feeding direction (10) .

The belt (20) should preferably be actuated by thin metal strips running alongside and parallel to one another, as shown in Figure 2.

The pulley wheel couple (21) and the metal strips should preferably have complementary mutually-coupled curved surfaces running transversally to the workpiece feeder line (10).

This has the dual purpose of ensuring adequate friction drag and that the belt (20) duly travels longitudinally relative to the feeding direction (10).

The metallic and practically inextensible properties of the belt (20) enable the carriage (9) to be advanced in an optimal and highly precise manner by the general operating and control systems of the apparatus (1).

The device (1) is fitted with a second carriage (22), arranged between said pushing member (6) and said first carriage (9), which is alternatively moveable transversally to the feeder line (10) and which enables the pushing member (6), and the components associated thereto, to move parallel to itself and transversally to the feeding direction (10) between two end points corresponding to where the pushing member (6) is aligned with the machine tool sleeve (23) when in the operating position, or is shifted laterally thereto when in the non-operating position.

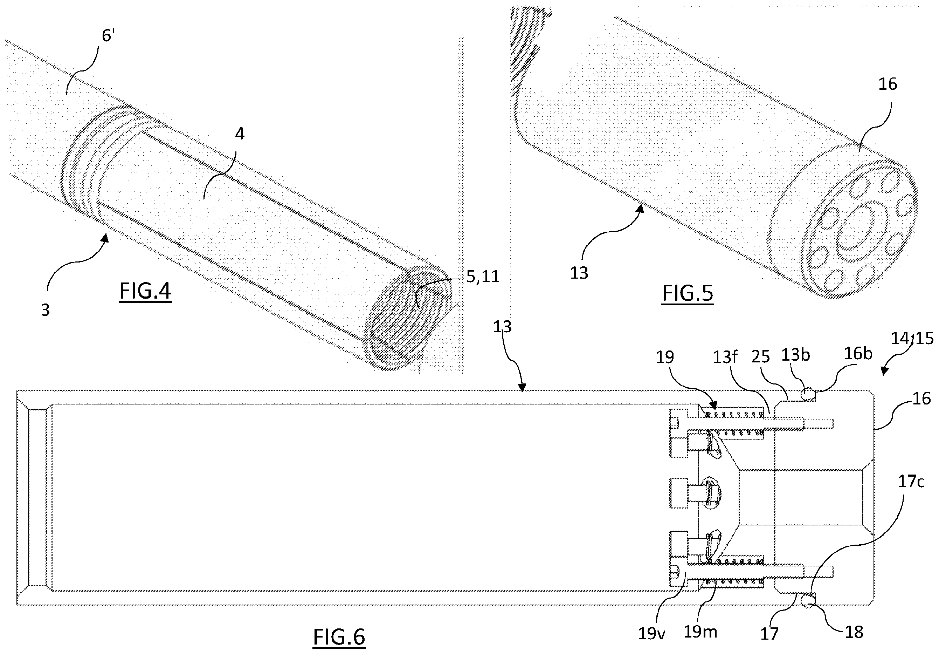

It can be seen in Figure 4 that the first collet (3) is equipped with arms (4) on the inside of which are opposable gripping surfaces (5), which in turn are fitted with partitions (11); these are automatically activated on the basis of geometric complementarity when the gripping surfaces (5) come into contact with the outer perimeter surface of a specific workpiece (2) used from time to time.

The partitions (11) of the gripping surfaces (5) may have variously-shaped, reciprocally opposing grooves at variable distances according to the direction of the feeder line (10).

These distances may be achieved in a multitude of different ways.

Indeed, it is possible to envisage shapes that have a continuous graduating pattern obtained, for instance, by the gripping surfaces (5) having a preferably conical formation, or shapes corresponding to other geometrical formations that follow, for instance, a discontinuous stepped pattern.

In other words, a single first collet (3) can attach to a wide range of variously-sized workpieces (2) and can push and/or hold them in all working situations, including situations that involve the workpiece (2) and the attached collet (3) moving forward and backward across the machine sleeve (23).

The first collet (3) is remotely actuated through the pushing member (6), as will be better illustrated hereinunder.

It can be seen in Figures 2, 3 and 5 that, together with the first collet (3), the pushing member (6) can also support a second collet, denoted with reference number (13), proceeding longitudinally from it.

This second collet (13) has an essentially cylindrical structure and is internally hollow.

The second collet (13) is fitted with gripping effectors, denoted overall with reference number (14).

Moreover, said collet (13) is remotely actuated through the pushing member (6) and can be positioned, in any location whatsoever, either inside a tubular-shaped workpiece (2) or inside the machine tool sleeve (23); finally, it may also operate either in an integrated structure with the first collet (13) or in a structure disintegrated from the latter depending on the machining needs arising from time to time.

It can be seen in Figure 6, in particular, that the gripping effectors (14) of the second collet (13) essentially comprise a buffer (16), moveable inside a guide (25), that is built into one end of the collet's (13) tubular shell.

The buffer (16) is equipped with a lateral surface (17) that features a conical element (17c) with an elastic ring (18) wound around its circumference. The buffer (16) is acted upon by elastic retraction means (19) comprising helical springs (19m) complemented by screws (19v) that engage the buffer (16) and pass through a base wall (13f) of the second collet (13) shell.

The elastic reaction of the springs (19m) forces the buffer (16) to move into the guide (25) and to force the elastic ring (18) between the rabbets (16b and 13b) formed by the buffer (16) on one side and by the collet (13) shell on the other.

Subsequently, the elastic ring (18) expands transversally vis-à-vis the feeder line (10) to assume an elastically deformed shape projecting out from the lateral perimeter surface of the second collet (13) shell.

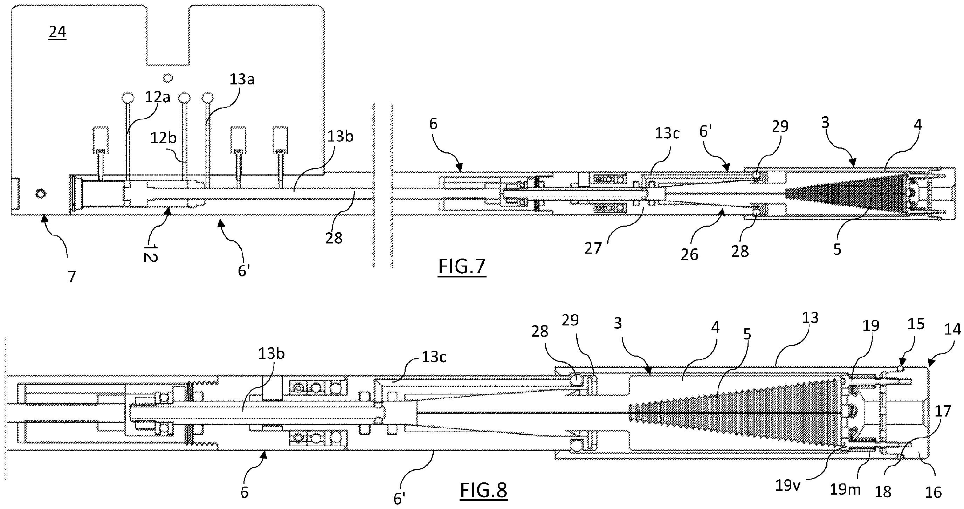

It can be seen in Figure 7 that the pushing member (6) and the operating member (7) house a circuit (12), internally and in conjunction with each other, that conveys signals, preferably pneumatic signals, to actuate the first collet (3) and, if present, the second collet (13).

More particularly, the arms (4) of the first collet (3) are formed by taper shanks (26) housed in a rotating chuck (27).

A needle (28) actuated by a pneumatic piston (29) - axially in both directions - enables the chuck to open and close the arms (4) of the first collet (3) according to need.

It is of note that the piston (29) is enabled to intercommunicate with the actuation circuit (12) through conduits (12a, 12b) made in the plate (24) of the operating member (7), into which the piston (29) is attached and and screwed.

Through a third conduit (13a) also made in the plate (24), a suitable pneumatic signal can travel along a section (13b) running axially along the pushing member (6) before flowing into a terminal section (13c) running inside the chuck (27),near to its periphery. By traversing this path (13a, 13b, 13c) the pressure signal is able to reach an elastic ring (28) located at the end of the route (13c) and to press it against a rabbet (29) formed by the chuck (27) itself.

In the presence of such pneumatic signal, the ring (28) is thus made to expand radially so as to project out from the lateral perimeter surface of the chuck (27) and, vice versa, is allowed to retract below the surface - by simple elastic contraction - once the pneumatic signal is overridden.

It can be seen in Figure 8 that when the use of the second collet (13) is necessary, this is cantilevered and projected forth from the first collet (3), with the second collet (13) shell having been axially inserted over the first collet (3) and over the terminal part of the chuck (27) sustaining the first collet (3). Once the second collet (13) has been mounted onto the first collet (3), the two collets (3) and (13) can be mutually actuated by a simple pneumatic signal that forces the ring (28) to expand radially, thus causing the collets (3 and 13) to lock with one another due to the ring (28) interfering with the inner surface of the second collet (13) cavity, or by overriding the signal to allow the second collet (13) to disengage and be axially removable from the first collet (3).

The operation of the invention when in use can be described by observing that the first collet (3), when used alone, is capable of automatically clamping the workpiece (2) by gripping it externally or peripherally, irrespective of whether the workpiece (2) machined from time to time is large or small. The pneumatic signals to open and close the collet (3), which can be remotely actuated via the pushing member (6), also allow the first collet (3) to unrestrictedly operate inside the machine tool sleeve (23), with the sole and obvious exception of the geometric limitations placed by the physical size of the sleeve (23).

When the workpiece (2) is hollow, as is the case of a tube, then in addition to the first collet (3) being capable of gripping the workpiece externally, the second collet (13) is also able to grip it from the inside, subsequent to having been mounted onto the first collet (3) as shown in Figure 8.

In this event, the tubular workpiece can be gripped by operation of the gripping effectors (14) of the second collet (13), which are activated or deactivated by the opposing actions of the arms (4) of the first collet (3) and by the elastic retraction means (19) attached to the effector (14).

Indeed, it can be observed in Figure 8 that, where the arms (4) of the first collet (3) are not in contact with the screws (19m) of the buffer (16) (as per the situation illustrated in that figure), the elastic retraction of the springs (19m) causes the ring (18) to press between the counter-parts (13b and 16b); having expanded radially, said ring (18) is conceived to be locked in place against the inner surface of the hollow tubular workpiece (2), which is gripped from the inside.

When the arms (4) are made to advance axially until encountering the screws (19v), the buffer (16) is pushed away from the collet shell (13); consequently, the elastic ring (18) is free to contract and disengage from the workpiece (2), which thus acquires the ability to move longitudinally vis-á-vis the second collet (13). Therefore, as well as being able to grip the workpiece (2) from the inside, the second collet (13) is also able to grip it inside the sleeve (23) and to engage it stably while the first collet (3) withdraws completely from inside the shell of the second collet (13) after having imparted a suitable pneumatic signal to the ring (28). Once released from the first collet (3), the second collet (13) is thus able to brake inside a containment cavity, which may be either the hollow of a tubular workpiece (2) or the hollow of the machine tool sleeve (23). This is enabled by the self-braking means (15) implemented by the buffer (16) itself, by the elastic ring (18) and by the functional relationships existing between them.

When the second collet (13) is released inside the sleeve (10), this advantageously enables a short workpiece undergoing machining to be sustained between two end slots formed by said collet (13) and by the machine tool chuck.

Such an operating method advantageously allows the workpiece (2) to be machined as fully as possible, in conditions of maximum mechanical stability, with minimum-intensity vibrations on the machine and a minimum acoustic impact on the working environment in which the machine tool is used.

The invention as designed herein is clearly capable of industrial application, and many modifications and variations can be made to it without departing from the claims set forth below.

The scope of these variations may also include remote signals to actuate the collets (3) and (13) by means of electrical technology-driven actuators.

## Claims

1. Feeding apparatus for feeding elongated workpieces (**2**) through the transit and guide sleeve (**23**) of a machine tool, which comprises:
at least one first collet (**3**) having arms (**4**) equipped with opposable gripping surfaces (**5**), in turn fitted with conical partitions (**11**), which are activated when the condition of a specific workpiece (**2**) coming into geometric contact with said grip surfaces (**5**) is met, where said first collet (**3**) can be actuated remotely, including while transiting through said sleeve (**23**);
a pushing member (**6**) which, at its first end (**6'**), supports said first collet (**3**), projecting horizontally towards said collet chuck, and, at its second end (**6ʺ**), is attached to an operating member (**7**;
means (**8**) for supporting and guiding the pushing member (**6**), comprising at least one first carriage (**9**), which is alternatively movable parallel to a workpiece (**2**) feeder line (**10**), to which said operating member (**7**) of the pushing member (**6**) is attached;
means (**8**) for the actuated operation of at least said first collet (**3**), housed inside said pushing member (**6**);
said feeding apparatus **characterising in that** said pushing member (**6**) is housing, in its interior, at least one circuit (**12**) conveying the signal actuating at least said first collet (**3**).

2. Apparatus according to claim **1, characterised in that** said circuit (**12**) conveying the signals actuating at least one first collet (**3**) is at least partly contained within said operating member (**7**).

3. Apparatus according to claim **1, characterised in that** it comprises at least one second collet **(13),** proceeding longitudinally from said pushing member **(6),** where said second collet is equipped with radially expandable gripping effectors **(14),** is remotely actuated and can be positioned, in any position whatsoever, inside the machine tool sleeve **(23).**

4. Apparatus according to claim **3, characterised in that** said second collet **(13)** leads on longitudinally from said first collet **(3).**

5. Apparatus according to claim **3** or **4, characterised in that** said second collet **(13)** is of a shape that can be contained within an axial cavity.

6. Apparatus according to claims **3** to **4, characterised in that** it comprises automatic braking means **(15)** of the said second collet **(13)** in any position whatsoever, desirably within said containment cavity.

7. Apparatus according to claim **6, characterised in that** said automatic braking means **(15)** include a buffer **(16)** equipped with a conical lateral surface **(17)** with an elastic ring **(18)** wrapped around its circumference, and **in that** it comprises elastic retraction means **(19)** to counteract said buffer **(16),** including a said elastic ring **(18)** that works to restrict, or to enable, the free movement of said second collet **(13)** against said housing cavity.

8. Apparatus according to claim **7, characterised in that** said elastic retraction means **(19)** are engineered to operate opposingly, by means of remote actuation, to the actuators of said second collet **(13).**

9. Apparatus according to claim **1, characterised in that** said first carriage **(9),** which is alternatively moveable, is supported by at least one belt **(20)** wrapped around a pulley wheel couple **(21),** at least one of which is motor-driven, with said - at least one - belt **(20)** running parallel to the workpiece **(2)** feeding direction **(10)** .

10. Apparatus according to claim **9, characterised in that** said - at least one - belt **(20)** is actuated by at least one thin metal strip.

11. Apparatus according to claim **10, characterised in that** said pulley wheel couple **(21)** and said metal strip have complementary mutually-coupled curved surfaces running transversally to the bar feeding line **(10).**

12. Apparatus according to claim **10, characterised in that** it comprises a second carriage **(22)** arranged between said pushing member **(6)** and said first carriage **(9),** where said second carriage is alternatively moveable transversally to said feeder line **(10)** between two end points corresponding to where said pushing member **(6)** is aligned with said sleeve **(23)** or, when in the non-operating position, where it is shifted laterally thereto.

## Patentansprüche

1. Zuführvorrichtung zur Zuführung länglicher Werkstücke (**2**) durch die Durchlauf- und Führungshülse (**23**) einer Werkzeugmaschine, die Folgendes umfasst:
mindestens eine erste Spannzange (**3**), die Arme (**4**) hat, die mit gegenüberliegenden Greifoberflächen (**5**) ausgestattet sind, die ihrerseits mit konischen Abtrennungen (**11**) ausgestattet sind, die aktiviert werden, wenn die Bedingung, dass ein bestimmtes Werkstück (**2**) in geometrischen Kontakt mit besagten Greifoberflächen (**5**) kommt, erfüllt ist, wobei besagte erste Spannzange (**3**) aus der Ferne betätigt werden kann, einschließlich während ihres Durchlaufs durch besagte Hülse (**23**);
ein Schieberelement (**6**), das an seinem ersten Ende (**6'**) besagte erste Spannzange (**3**) stützt, wobei es sich horizontal in Richtung zur besagten Spannzange erstreckt, und an seinem zweiten Ende (**6ʺ**) an einem Betriebselement (**7**) befestigt ist;
Mittel (**8**) zur Stützung und Führung des Schieberelements (**6**), mindestens einen ersten Schlitten (**9**) beinhaltend, der alternativ parallel zu einer Zuführungslinie (**10**) für Werkstücke (**2**) beweglich ist, an der besagtes Betriebselement (**7**) des Schieberelements (**6**) befestigt ist;
Mittel (**8**) zum betätigten Betrieb der mindestens besagten ersten Spannzange (**3**), die in besagtem Schieberelement (**6**) untergebracht sind;
besagte Zuführvorrichtung ist dabei **dadurch gekennzeichnet, dass** im Inneren des besagten Schieberelements (**6**) mindestens ein Kreislauf (**12**) untergebracht ist, der das Signal überträgt, das die besagte mindeste erste Spannzange (**3**) betätigt.

2. Die Vorrichtung nach dem Patentanspruch **1, gekennzeichnet dadurch, dass** besagter Kreislauf (**12**), der die Signale überträgt, die zumindest eine erste Spannzange (**3**) betätigen, zumindest teilweise in besagtem Betriebselement (**7**) enthalten ist.

3. Die Vorrichtung nach dem Patentanspruch **1, gekennzeichnet dadurch, dass** sie mindestens eine zweite Spannzange (**13**) beinhaltet, die längs von besagtem Schieberelement (**6**) verläuft, wobei besagte zweite Spannzange mit radial ausfahrbaren Greifeffektoren (**14**) ausgestattet ist, aus der Ferne betätigt wird und in jeder beliebigen Lage im Inneren der Werkzeugmaschinenhülse (**23**) positioniert werden kann.

4. Die Vorrichtung nach dem Patentanspruch **3, gekennzeichnet dadurch, dass** besagte zweite Spannzange (**13**) weiter in der Längsrichtung von besagter erster Spannzange (**3**) verläuft.

5. Die Vorrichtung nach dem Patentanspruch **3** oder **4, gekennzeichnet dadurch, dass** besagte zweite Spannzange (**13**) eine Form hat, die in einer axialen Höhlung untergebracht werden kann.

6. Die Vorrichtung nach den Patentansprüchen **3** bis **4, gekennzeichnet dadurch, dass** sie automatische Bremsmittel (**15**) der zweiten besagten Spannzange (**13**) in jeder beliebigen Lage, die innerhalb der besagten Unterbringungshöhlung gewünscht sind, beinhaltet.

7. Die Vorrichtung nach dem Patentanspruch **6, gekennzeichnet dadurch, dass** besagte automatische Bremsmittel (**15**) einen Stoßdämpfer (**16**) beinhalten, der mit einer konischen Seitenfläche (**17**) mit einem elastischen Ring (**18**), der um ihren Umfang gewickelt ist, ausgestattet ist und dass sie elastische Rückziehmittel (**19**) beinhaltet, um besagtem Stoßdämpfer (**16**) entgegen zu wirken, einschließlich eines besagten elastischen Rings (**18**), der dazu dient, die freie Bewegung der besagten zweiten Spannzange (**13**) gegen besagte Unterbringungshöhlung einzuschränken beziehungsweise zu ermöglichen.

8. Die Vorrichtung nach dem Patentanspruch **7, gekennzeichnet dadurch, dass** besagte elastische Rückziehmittel (**19**) konstruiert sind, um mithilfe einer Betätigung aus der Ferne im Gegensatz zu den Stellantrieben besagter zweiter Spannzange (**13**) zu arbeiten.

9. Die Vorrichtung nach dem Patentanspruch **1, gekennzeichnet dadurch, dass** besagter erster Schlitten (**9**), der alternativ beweglich ist, von mindestens einem Riemen (**20**) gestützt wird, der um ein Riemenscheibenpaar (**21**) gewickelt ist, von denen mindestens eine motorbetrieben ist, wobei besagter - mindestens ein - Riemen (**20**) parallel zur Zuführungsrichtung (**10**) des Werkstücks (**2**) verläuft.

10. Die Vorrichtung nach dem Patentanspruch **9, gekennzeichnet dadurch, dass** besagter - mindestens ein - Riemen (**20**) durch mindestens einen dünnen Metallstreifen betätigt wird.

11. Die Vorrichtung nach dem Patentanspruch **10, gekennzeichnet dadurch, dass** besagtes Riemenscheibenpaar (**21**) und besagter Metallstreifen komplementäre, miteinander gekoppelte gewölbte Oberflächen haben, die quer zur Stangenzuführungsrichtung (**10**) verlaufen.

12. Die Vorrichtung nach dem Patentanspruch **10, gekennzeichnet dadurch, dass** sie einen zweiten Schlitten (**22**) beinhaltet, der zwischen besagtem Schieberelement (**6**) und besagtem ersten Schlitten (**9**) angeordnet ist, wobei besagter zweiter Schlitten alternativ quer zu besagter Zuführungslinie (**10**) zwischen zwei Endpunkten beweglich ist, die den Stellen entsprechen, wo besagtes Schieberelement (**6**) mit besagter Hülse (**23**) gefluchtet ist, beziehungsweise, wenn er in der Ruheposition ist, wo er seitlich dazu verschoben ist.

## Revendications

1. Dispositif d'alimentation pour alimenter des pièces à usiner allongées (**2**) à travers le fourreau de passage et de guidage (**23**) d'une machine-outil, qui comprend :
au moins une première pince (**3**) ayant des bras (**4**) dotés de surfaces de prise (**5**) opposables, dotées à leur tour de partitions coniques (**11**), qui sont activés lorsque la condition d'une pièce à usiner (**2**) spécifique venant en contact géométrique avec lesdites surfaces de prise (**5**) est obtenue, où ladite première pince (**3**) peut être actionnée à distance, y compris lors du passage à travers ledit fourreau (**23**) ;
un organe pousseur (**6**) qui, au niveau de sa première extrémité (**6'**), supporte ladite première pince (**3**), saillant horizontalement vers ledit mandrin à pince, et, au niveau de sa deuxième extrémité (**6ʺ**), est fixé à un organe de manœuvre (**7**) ;
des moyens (**8**) de support et de guidage de l'organe pousseur (**6**), comprenant au moins un premier chariot (**9**), qui est alternativement mobile parallèlement à une ligne (**10**) d'alimentation de la pièce à usiner (**2**), auquel est fixé ledit organe de manœuvre (**7**) de l'organe pousseur (**6**) ;
des moyens (**8**) pour l'actionnement commandé de ladite au moins une première pince (**3**), logés dans ledit organe pousseur (**6**) ;
ledit dispositif d'alimentation étant **caractérisé en ce que** ledit organe pousseur (**6**) loge, intérieurement, au moins un circuit (**12**) véhiculant le signal de commande de ladite au moins une première pince (**3**).

2. Dispositif selon la revendication **1, caractérisé en ce que** ledit circuit (**12**) véhiculant les signaux de commande de ladite au moins une première pince (**3**) est au moins partiellement contenu à l'intérieur dudit organe de manœuvre (**7**).

3. Dispositif selon la revendication **1, caractérisé en ce qu'**il comprend au moins une deuxième pince (**13**), en continuité longitudinale dudit organe pousseur (**6**), où ladite deuxième pince est dotée d'effecteurs de prise (**14**) extensibles radialement, est commandée à distance et peut être positionnée, dans n'importe quelle position, à l'intérieur du fourreau (**23**) de la machine-outil.

4. Dispositif selon la revendication **3, caractérisé en ce que** ladite deuxième pince (**13**) s'étend longitudinalement à partir de ladite première pince (**3**).

5. Dispositif selon la revendication **3** ou **4, caractérisé en ce que** ladite deuxième pince (**13**) a une forme qui peut être contenue à l'intérieur d'une cavité axiale.

6. Dispositif selon les revendications de **3** à **4, caractérisé en ce qu'**il comprend des moyens (**15**) de freinage automatique de ladite deuxième pince (**13**) dans n'importe quelle position, de manière souhaitable à l'intérieur de ladite cavité de logement.

7. Dispositif selon la revendication **6, caractérisé en ce que** lesdits moyens de freinage automatique (**15**) comprennent un tampon (**16**) doté d'une surface latérale conique (**17**) avec un anneau élastique (**18**) enroulé autour de sa circonférence, et **en ce qu'**il comprend des moyens élastiques de rétraction (**19**) pour s'opposer audit tampon (**16**), comprenant ledit un anneau élastique (**18**) qui opère pour inhiber, ou pour permettre, le mouvement libre de ladite deuxième pince (**13**) contre ladite cavité de logement.

8. Dispositif selon la revendication **7, caractérisé en ce que** lesdits moyens élastiques de rétraction (**19**) sont conçus pour opérer en opposition, via une commande à distance, aux actionneurs de ladite deuxième pince (**13**).

9. Dispositif selon la revendication **1, caractérisé en ce que** ledit premier chariot (**9**), qui est alternativement mobile, est supporté par au moins une courroie (**20**) enroulée autour d'une paire de roues de poulie (**21**), dont au moins une est motorisée, avec ladite - au moins une - courroie (**20**) se développant parallèlement à la direction (**10**) d'alimentation de la pièce à usiner (**2**).

10. Dispositif selon la revendication **9, caractérisé en ce que** ladite - au moins une - courroie (**20**) est actionnée par au moins une bande métallique mince.

11. Dispositif selon la revendication **10, caractérisé en ce que** ladite paire de roues de poulie (**21**) et ladite bande métallique ont des surfaces incurvées complémentaires mutuellement accouplées, se développant transversalement à la ligne (**10**) d'alimentation des barres.

12. Dispositif selon la revendication **10, caractérisé en ce qu'**il comprend un deuxième chariot (**22**) disposé entre ledit organe pousseur (**6**) et ledit premier chariot (**9**), où ledit deuxième chariot est alternativement mobile transversalement à ladite ligne d'alimentation (**10**) entre deux points extrêmes correspondant à l'endroit où ledit organe pousseur (**6**) est aligné avec ledit fourreau (**23**) ou, lorsqu'il est dans la position non opérationnelle, à l'endroit où il est décalé latéralement par rapport à celui-ci.
